(19) Europäisches Patentamt
European Patent Office
Office européen des brevets

(11) EP 4 300 042 A1

(12) EUROPEAN PATENT APPLICATION
published in accordance with Art. 153(4) EPC

(43) Date of publication:
03.01.2024 Bulletin 2024/01

(51) International Patent Classification (IPC):
$G01C\ 21/26^{(2006.01)}$  $G01C\ 21/16^{(2006.01)}$
$G01C\ 21/20^{(2006.01)}$  $G06T\ 7/277^{(2017.01)}$
$G06F\ 17/11^{(2006.01)}$

(21) Application number: 22758966.0

(22) Date of filing: 25.02.2022

(86) International application number:
PCT/CN2022/077896

(87) International publication number:
WO 2022/179602 (01.09.2022 Gazette 2022/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.02.2021 CN 202110214125

(71) Applicant: GUANGZHOU ASENSING
TECHNOLOGY CO., LTD.
Guangdong 510000 (CN)

(72) Inventors:
• WANG, Jiede
  Guangzhou, Guangdong 510000 (CN)
• SITU, Chunhui
  Guangzhou, Guangdong 510000 (CN)
• HAN, Leijin
  Guangzhou, Guangdong 510000 (CN)
• PANG, Jing
  Guangzhou, Guangdong 510000 (CN)

(74) Representative: ABG Intellectual Property Law,
S.L.
Avenida de Burgos, 16D
Edificio Euromor
28036 Madrid (ES)

(54) NAVIGATION INFORMATION PROCESSING METHOD AND APPARATUS, ELECTRONIC DEVICE, AND STORAGE MEDIUM

(57) Disclosed is a navigation information processing method and apparatus, an electronic device, and a storage medium. The navigation information processing method includes: acquiring (S 101) motion state information of a vehicle based on an inertial device, and acquiring vehicle information of the vehicle based on a controller area network; performing (S102) a strapdown solution on the motion state information to obtain navigation information; fusing (S 103) the navigation information and the vehicle information by using a preset Kalman filter to obtain target navigation information, where an input vector of the Kalman filter is a two-dimensional vector; and navigating (S104) the vehicle based on the target navigation information. In the navigation information processing method, data collection does not need to rely on environment, and problems of unstable navigation effects caused by insufficient acquired data are solved. A Kalman filter is used to fuse navigation information and vehicle information, improving accuracy of navigation information and precision of positioning. In addition, a two-dimensional vector is used as an input vector of the Kalman filter, which has a simple filtering manner and consumes few hardware resources, reducing navigation costs.

Acquiring motion state information of a vehicle based on an inertial device, and acquiring vehicle information of the vehicle based on a controller area network — S101

Performing a strapdown solution on the motion state information to obtain navigation information — S102

Fusing the navigation information and the vehicle information by using a preset Kalman filter to obtain target navigation information, where an input vector of the Kalman filter is a two-dimensional vector — S103

Navigating the vehicle based on the target navigation information — S104

FIG. 1

**Description**

**TECHNICAL FIELD**

This application relates to the field of computer technologies, and specifically, to a navigation information processing method and apparatus, an electronic device, and a storage medium.

**BACKGROUND**

With the rapid development of the modern vehicle industry, intelligent driving has currently become a development trend of the vehicle industry. Smart driving is an important breakthrough combining the industrial revolution and informatization, which can change a flow mode of people, resource elements, and products, and dramatically change human life. Smart driving refers to a technology in which a machine assists a person in driving, and completely replaces a human driver in a special case.

In a related technology, technologies such as machine vision, satellite positioning, and laser radar positioning are widely applied to smart driving. However, in order to improve accuracy, more and more data is required in the foregoing technologies, algorithm units are also becoming larger and larger, and thus increasingly high requirements are proposed for software and hardware, ultimately making it difficult to popularize a smart driving technology. Especially, due to closure and instability of light source in an underground garage, many devices participating in positioning cannot provide a large amount of data, leading to failure of the devices. Therefore, smart driving currently has problems of high navigation costs and unstable navigation effect.

**SUMMARY**

Objectives of embodiments of the present application are to provide a navigation information processing method and apparatus, an electronic device, and a storage medium, to solve problems of high navigation costs and unstable navigation effects currently existing in vehicle navigation.

According to a first aspect, an embodiment of the present application provides a navigation information processing method, including:

acquiring motion state information of a vehicle based on an inertial device, and acquiring vehicle information of the vehicle based on a controller area network;
performing a strapdown solution on the motion state information to obtain navigation information;
fusing the navigation information and the vehicle information by using a preset Kalman filter to obtain target navigation information, where an input vector of the Kalman filter is a two-dimensional vector; and
navigating the vehicle based on the target navigation information.

In this embodiment, motion state information of a vehicle acquired based on an inertial device and vehicle information of the vehicle acquired based on a controller area network are used as input data, so that data collection does not need to rely on an environment, solving problems of unstable navigation effects caused by insufficient acquired data. Navigation information is obtained based on the motion state information, thereby implementing positioning independent of environment information. A Kalman filter is used to fuse navigation information and vehicle information, so that the vehicle information is used to correct the navigation information, improving accuracy of the navigation information and precision of positioning. In addition, the two-dimensional vector is used as an input vector of the Kalman filter, which has a simple filtering manner and consumes few hardware resources, reducing navigation costs.

Further, the acquiring motion state information of a vehicle based on an inertial device includes:

acquiring a three-axis acceleration and a three-axis angular velocity of the vehicle based on the inertial device;
calculating position coordinates, a three-dimensional motion velocity, and an attitude quaternion of the vehicle based on the three-axis acceleration and the three-axis angular velocity; and
constructing a state vector of the vehicle based on the position coordinates, the three-dimensional motion velocity, and the attitude quaternion, and using the state vector as the motion state information.

In this embodiment, the position coordinates, the three-dimensional motion velocity, and the attitude quaternion of a vehicle are obtained by means of calculation based on an inertial device, and on such as basis, the motion state information is obtained, so that data collection does not need to rely on an environment, thereby reducing data collection difficulty.

Further, the acquiring vehicle information of the vehicle based on a controller area network includes:

acquiring, based on the controller area network, a target steering angle and a target movement velocity of the vehicle in a target time period;

calculating an angle residual value of the target steering angle and a velocity residual value of the target movement velocity; and

using the target steering angle and the target movement velocity as the vehicle information when the angle residual value is less than a first preset threshold and the velocity residual value is less than a second preset threshold.

In this embodiment, the angle residual value and the velocity residual value are calculated to identify whether the target steering angle and the target movement velocity become suddenly too large or too small, so as to ensure that the target steering angle and the target movement velocity are available data, and further ensure accuracy of a navigation information calculation result.

Further, the acquiring, based on the controller area network, a target steering angle and a target movement velocity of the vehicle in a target time period includes:

acquiring, based on the controller area network, a steering angle and a movement velocity of the vehicle in the target time period;

determining a first difference value between a time for acquiring the steering angle and a time for acquiring the motion state information, and a second difference value between a time for acquiring the movement velocity and a time for acquiring the motion state information; and

using the steering angle as the target steering angle and using the movement velocity as the target movement velocity when both the first difference value and the second difference value are less than a preset difference value.

In this embodiment, data alignment is performed on the steering angle, the movement velocity, and the motion state information by means of an acquisition time, to ensure that the foregoing data are collected at a same time, and data bias is reduced, so as to improve data accuracy.

Further, the motion state information includes position coordinates, a three-dimensional motion velocity, and an attitude quaternion, and the performing a strapdown solution on the motion state information to obtain navigation information includes:

separately performing differentiation on the position coordinates, the three-dimensional motion velocity, and the attitude quaternion to obtain a first derivative result, where a derivative result of the three-dimensional motion velocity is a three-dimensional motion acceleration;

performing bias correction on the three-dimensional motion acceleration in the first derivative result to obtain a second derivative result; and

performing fourth-order approximation operation on the second derivative result to obtain the navigation information.

In this embodiment, the three-dimensional motion acceleration is corrected to reduce an adverse effect of a gravitational acceleration, and the fourth-order approximation operation is performed on the second derivative result to improve accuracy of the navigation information.

Further, the performing bias correction on the three-dimensional motion acceleration in the first derivative result to obtain a second derivative result includes:

performing the bias correction on the three-dimensional motion acceleration by using a preset calculation formula to obtain an acceleration correction result, and forming the second derivative result by using a derivative result of the position coordinates, a derivative result of the attitude quaternion, and the acceleration correction result, where the preset calculation formula is as follow:

$$f_{xyz} = C_b^n f_{sf}^b - (2w_{ie} + w_{en}) \times v_{en} + g$$

where $f_{xyz}$ is an acceleration correction result, $Cb$ is a navigation coordinate system, $f_{sf}^b$ is a three-dimensional motion acceleration, $2w_{ie} \times v_{en}$ is a Coriolis acceleration caused by vehicle motion and rotation of the earth, $w_{en} \times v_{en}$ is a centripetal acceleration to the ground caused by the vehicle motion, and g is a gravitational acceleration.

In this embodiment, the gravitational acceleration and the Coriolis acceleration are removed, so as to eliminate an adverse effect of a harmful acceleration on the three-dimensional motion acceleration, thereby improving accuracy of a calculation result.

Further, the vehicle information includes a steering angle and a movement velocity, and the fusing the navigation information and the vehicle information by using a preset Kalman filter to obtain target navigation information includes:

obtaining an angle residual value of the steering angle and a velocity residual value of the movement velocity;
forming a two-dimensional observation vector by using the steering angle and the movement velocity, and forming an observation noise by using the angle residual value and the velocity residual value;
calculating a Kalman gain value of the Kalman filter based on the observation noise; and
performing data correction on the navigation information based on the two-dimensional observation vector and the Kalman gain value to obtain the target navigation information.

In this embodiment, the Kalman gain value is calculated by using the observation noise formed by the residual values, and the navigation information is corrected by using the two-dimensional observation vector formed by the steering angle and the movement velocity, so that the navigation information is corrected by using the vehicle information, noise impact is eliminated, and data accuracy is improved.

According to a second aspect, an embodiment of the present application provides a navigation information processing apparatus, including:

an acquisition module, configured to acquire motion state information of a vehicle based on an inertial device, and acquire vehicle information of the vehicle based on a controller area network;
a solution module, configured to perform a strapdown solution on the motion state information to obtain navigation information;
a fusion module, configured to fuse the navigation information and the vehicle information by using a preset Kalman filter to obtain target navigation information, where an input vector of the Kalman filter is a two-dimensional vector; and
a navigation module, configured to navigate the vehicle based on the target navigation information.

According to a third aspect, an embodiment of the present application provides an electronic device, including a memory and a processor. The memory is configured to store a computer program, and the processor runs the computer program to cause the electronic device to perform the navigation information processing method according to the first aspect.

According to a fourth aspect, an embodiment of the present application provides a computer-readable storage medium on which a computer program is stored. When the computer program is executed by a processor, the navigation information processing method according to the first aspect is implemented.

It may be appreciated that, for beneficial effects of the second aspect to the fourth aspect, reference may be made to the related description in the first aspect, and details are not repeated herein.

**BRIEF DESCRIPTION OF THE DRAWINGS**

To describe the technical solutions in embodiments of the present application more clearly, the following briefly describes the accompanying drawings required in the embodiments of the present application. It should be appreciated that the accompanying drawings in the following description show some embodiments of the present application, and therefore should not be taken as limiting the scope. A person of ordinary skill in the art may still derive other drawings from these accompanying drawings without creative efforts.

FIG. 1 is a schematic diagram of a navigation information processing method according to an embodiment of the present application;
FIG. 2 is a schematic structural diagram of a navigation information processing apparatus according to an embodiment of the present application; and
FIG. 3 is a schematic structural diagram of an electronic device according to an embodiment of the present application.

**DETAILED DESCRIPTIONS OF THE EMBODIMENTS**

The following describes the technical solutions in the embodiments of the present application in combination with the accompanying drawings in the embodiments of the present application.

It should be noted that similar reference signs and letters indicate similar items in the following drawings. Therefore, once a specific item is defined in one drawing, it does not need to be further defined and explained in the subsequent drawings. In addition, in description of the present application, the terms "first", "second" and the like are merely intended for purposes of description, and shall not be understood as an indication or implication of relative importance.

As stated in Background, in current technologies, due to closure and instability of light source in an underground garage, many devices participating in positioning cannot provide a large amount of data, leading to failure of the devices, and causing problems of high navigation costs and unstable navigation effects.

In view of the problems in the conventional technologies, the present application provides a navigation information processing method. According to the method, motion state information of a vehicle acquired based on an inertial device and vehicle information of the vehicle acquired based on a controller area network are used as input data, so that data collection does not need to rely on an environment, solving problems of unstable navigation effects caused by insufficient acquired data. Navigation information is obtained based on the motion state information, thereby implementing positioning independent of environment information. A Kalman filter is used to fuse navigation information and vehicle information, so that the vehicle information is used to correct the navigation information, improving accuracy of the navigation information and precision of positioning. In addition, a two-dimensional vector is used as an input vector of the Kalman filter, which has a simple filtering manner and consumes few hardware resources, reducing navigation costs.

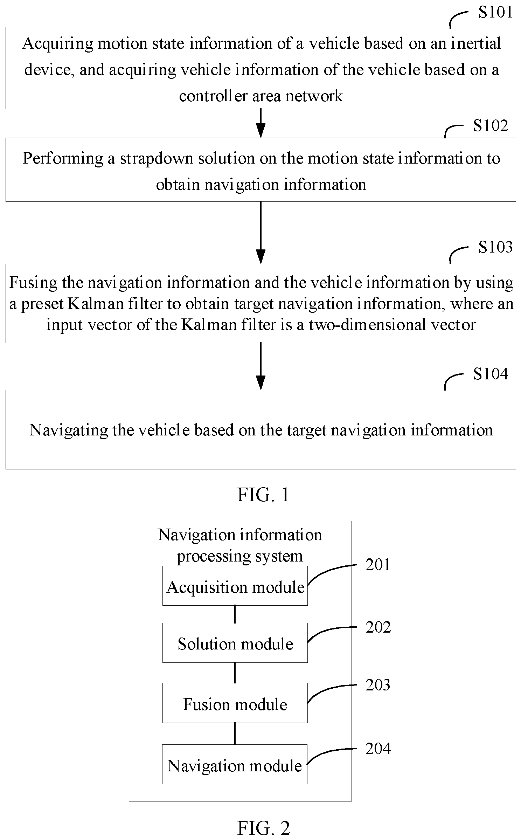

Referring to FIG. 1, FIG. 1 is a schematic diagram of a navigation information processing method according to an embodiment of the present application. The navigation information processing method described below in the embodiments of the present application may be applied to an electronic device, and the electronic device includes, but is not limited to, a vehicle-mounted computer, a smartphone, a tablet computer, a desktop computer, a supercomputer, a personal digital assistant, a physical server, a cloud server, and another computer device that are in communication connection with a CAN bus of a vehicle. The navigation information processing method in the embodiment of the present application includes Step S101 to Step S104, and details are as follows.

Step S101: Acquiring motion state information of a vehicle based on an inertial device, and acquiring vehicle information of the vehicle based on a controller area network.

In this embodiment, the inertial device includes, but is not limited to, a three-dimensional acceleration sensor, a three-dimensional angular velocity sensor, a gyroscope, and the like, and may be installed on a body of the vehicle. The controller area network (Controller Area Network, CAN) is a standard bus of a vehicle computer control system and an embedded industrial control area network, and includes vehicle CAN information such as a vehicle velocity, a wheel speed and a steering angle. The motion state information is a current motion condition of the vehicle, which includes, but is not limited to, a velocity, an acceleration, an attitude angle, and the like of the vehicle, and the vehicle information is CAN information of the vehicle.

In this embodiment, the motion state information of a vehicle acquired based on an inertial device and the vehicle information of the vehicle acquired based on a controller area network are used as input data, so that data collection does not need to rely on an environment, solving problems of unstable navigation effects caused by insufficient acquired data.

In an embodiment, the acquiring motion state information of a vehicle based on an inertial device includes: acquiring a three-axis acceleration and a three-axis angular velocity of the vehicle based on the inertial device; calculating position coordinates, a three-dimensional motion velocity, and an attitude quaternion of the vehicle based on the three-axis acceleration and the three-axis angular velocity; and constructing a state vector of the vehicle based on the position coordinates, the three-dimensional motion velocity, and the attitude quaternion, and using the state vector as the motion state information.

In this embodiment, the three-axis acceleration of a vehicle may be acquired based on a three-dimensional acceleration sensor, and the three-axis angular velocity of the vehicle may be acquired based on a three-dimensional angular velocity sensor. A starting point of the vehicle is used as an origin of coordinates, and the current position coordinates $(p_x, p_y, p_z)$, the three-dimensional motion velocity $(v_x, v_y, v_z)$, and the attitude quaternion $(q_0, q_1, q_2, q_3)$ formed by an attitude angle are calculated based on the three-axis acceleration and the three-axis angular velocity, finally constructing the state vector $X_n = \{p_x\ p_y\ p_z\ v_x\ v_y\ v_z\ q_0\ q_1\ q_2\ q_3\}$.

In this embodiment, the position coordinates, the three-dimensional motion velocity, and the attitude quaternion of a vehicle are obtained by means of calculation based on an inertial device, and on such as basis, the motion state information is obtained, so that data collection does not need to rely on an environment, thereby reducing data collection difficulty.

Optionally, the acquiring vehicle information of the vehicle based on a controller area network includes: acquiring, based on the controller area network, a target steering angle and a target movement velocity of the vehicle in a target time period; calculating an angle residual value of the target steering angle and a velocity residual value of the target movement velocity; and using the target steering angle and the target movement velocity as the vehicle information when the angle residual value is less than a first preset threshold and the velocity residual value is less than a second preset threshold.

In this embodiment, with regard to the target movement velocity, a difference between adjacent target movement velocities in a time period is calculated to obtain a difference value $V_d$. A quantity m of $V_d$s greater than a preset value is determined; the $V_d$s greater than the preset value are summed to obtain $V_{sum}$; and the velocity residual value

$$E_v = \frac{abs(V_{sum})}{m^2}$$ is calculated based on the following formula. When the velocity residual value is less than the first preset threshold, it indicates that the target movement velocity in the time period is available data. It may be appreciated that, as for calculation of the angle residual value, reference may be made to an operation manner of the velocity residual value, and details are not described herein again.

In this embodiment, the angle residual value and the velocity residual value are calculated to identify whether the target steering angle and the target movement velocity become suddenly too large or too small, so as to ensure that the target steering angle and the target movement velocity are available data, and further ensure accuracy of a navigation information calculation result.

In a possible implementation, the acquiring, based on the controller area network, a target steering angle and a target movement velocity of the vehicle in a target time period includes: acquiring, based on the controller area network, a steering angle and a movement velocity of the vehicle in the target time period; determining a first difference value between a time for acquiring the steering angle and a time for acquiring the motion state information, and a second difference value between a time for acquiring the movement velocity and a time for acquiring the motion state information; and using the steering angle as the target steering angle and using the movement velocity as the target movement velocity when both the first difference value and the second difference value are less than a preset difference value.

In this implementation, a time for acquiring each of the steering angle, the movement velocity, and the motion state information is recorded, where the time for acquiring the motion state information may be specifically a time for acquiring the three-axis acceleration and the three-axis angular velocity. Data alignment is performed on the steering angle, the movement velocity, and the motion state information by means of an acquisition time. When the first difference value is less than the preset difference value, it indicates that the steering angle and the motion state information are obtained in a same time period. When the second difference value is less than the preset difference value, it indicates that the movement velocity and the motion state information are acquired in a same time period. When the first difference value and the second difference value are both less than the preset difference value, it indicates that the steering angle, the movement velocity, and the motion state information are obtained in a same time period. In this embodiment, it is ensured that the foregoing data are collected at a same time, and data bias is reduced, so as to improve data accuracy.

Step S102: Performing a strapdown solution on the motion state information to obtain navigation information.

In this embodiment, the strapdown solution is a strapdown inertial navigation solution, and strapdown means to fixedly connect to a carrier (a vehicle). In this embodiment, the motion state information includes position coordinates, a three-dimensional motion velocity, and an attitude quaternion. A strapdown solution process may be a process that differentiation is performed on the motion state information to obtain the navigation information, thereby implementing positioning independent of environment information.

In an embodiment, the performing a strapdown solution on the motion state information to obtain navigation information includes: separately performing differentiation on the position coordinates, the three-dimensional motion velocity, and the attitude quaternion to obtain a first derivative result, where a derivative result of the three-dimensional motion velocity is a three-dimensional motion acceleration; performing bias correction on the three-dimensional motion acceleration in the first derivative result to obtain a second derivative result; and performing fourth-order approximation operation on the second derivative result to obtain the navigation information.

In this embodiment, the motion state information $X_n$ = {$p_x$ $p_y$ $p_z$ $v_x$ $v_y$ $v_z$ $q_0$ $q_1$ $q_2$ $q_3$}, a derivative result of the position coordinates ($p_x$, $p_y$, $p_z$) is a velocity ($u_x$, $u_y$, $u_z$), a derivative result of the three-dimensional motion velocity ($v_x$, $v_y$, $v_z$) is the three-dimensional motion acceleration ($a_x$, $a_y$, $a_z$), and a derivative result of the attitude quaternion ($q_0$, $q_1$, $q_2$, $q_3$) is an attitude angle $w_{dot}$ ; and in this case, the first derivative result is $X_{ndot}$ = {$u_x$ $u_y$ $u_z$ $a_x$ $a_y$ $a_z$ $w_{dot}$ }. After the three-dimensional motion acceleration ($a_x$, $a_y$, $a_z$) is corrected, an acceleration ($f_x$, $f_y$, $f_z$) is obtained; and in this case, the second derivative result is $X_{ndot}$ = {$u_x$ $u_y$ $u_z$ $f_x$ $f_y$ $f_z$ $w_{dot}$}.

For example, the fourth-order approximation operation is performed on the second derivative result by calculating a slope K, which is specifically as follows:

$$K_1 = X_{ndot}$$

$$X_{n+1} = X_n + \frac{dt}{2} \times K_1$$

$$K_2 = X_{n+1dot}$$

$$X_{n+2} = X_{n+1} + \frac{dt}{2} \times K_2$$

$$K_3 = X_{n+2dot}$$

$$X_{n+3} = X_{n+2} + d_t \times K_3$$

$$K_4 = X_{n+3dot}$$

$$X_{n+4} = X_n + \frac{dt}{6}(K_1 + 2 \times K_2 + 2 \times K_3 + K_4)$$

where $X_{n+4}$ is the navigation information, including a vehicle position, a motion velocity, and an attitude quaternion.

Optionally, the performing bias correction on the three-dimensional motion acceleration in the first derivative result to obtain a second derivative result includes: performing the bias correction on the three-dimensional motion acceleration by using a preset calculation formula to obtain an acceleration correction result, and forming the second derivative result by using a derivative result of the position coordinates, a derivative result of the attitude quaternion, and the acceleration correction result, where the preset calculation formula is as follow:

$$f_{xyz} = C_b^n f_{sf}^b - (2w_{ie} + w_{en}) \times v_{en} + g$$

where $f_{xyz}$ is an acceleration correction result, $Cb$ is a navigation coordinate system, $f_{sf}^b$ is a three-dimensional motion acceleration, $2w_{ie} \times v_{en}$ is a Coriolis acceleration caused by vehicle motion and rotation of the earth, $w_{en} \times v_{en}$ is a centripetal acceleration to the ground caused by the vehicle motion, and g is a gravitational acceleration.

In this embodiment, the gravitational acceleration and the Coriolis acceleration are removed, so as to eliminate an adverse effect of a harmful acceleration on the three-dimensional motion acceleration, thereby improving accuracy of a calculation result.

Step S103: Fusing the navigation information and the vehicle information by using a preset Kalman filter to obtain target navigation information, where an input vector of the Kalman filter is a two-dimensional vector.

In this embodiment, the Kalman filter is an algorithm used to perform an optimal estimation on a system state based on system input and output observation data by using a linear system state equation. Since the observation data includes impact of noise and interference in the system, the optimal estimation may also be considered as a filtering process. Due to existence of bias in the navigation information to some extent, the navigation information is corrected. Specifically, in this embodiment, the navigation information is filtered by using the vehicle information, so that the navigation information is corrected by using the vehicle information, improving accuracy of the navigation information and precision of positioning. In addition, the two-dimensional vector is used as an input vector of the Kalman filter, which has a simple filtering manner and consumes few hardware resources, reducing navigation costs.

In an embodiment, the vehicle information includes a steering angle and a movement velocity, and the fusing the navigation information and the vehicle information by using a preset Kalman filter to obtain target navigation information includes: obtaining an angle residual value of the steering angle and a velocity residual value of the movement velocity; forming a two-dimensional observation vector by using the steering angle and the movement velocity, and forming an observation noise by using the angle residual value and the velocity residual value; calculating a Kalman gain value of the Kalman filter based on the observation noise; and performing data correction on the navigation information based on the two-dimensional observation vector and the Kalman gain value to obtain the target navigation information.

In this embodiment, the observation data is the steering angle and movement velocity $Z_k = \begin{bmatrix} W_{veh} \\ V_{veh} \end{bmatrix}$, and the observation noise is the angle residual value of the steering angle and velocity residual value of the movement

velocity $R_k = \begin{bmatrix} E_w \\ E_v \end{bmatrix}$. The Kalman gain is $K_k = P_k^- H_K^T (H_k P_k^- H_k^T + R_k)^{-1}$, where H is a transition matrix, and P is a covariance; and a correction formula for performing data correction on the navigation information is $\hat{X}_k^+ = \hat{X}_k^- + K_k(z_k - H_k \hat{X}_k^-)$, where $\hat{X}_k^+$ is the latest navigation information. In order to obtain the Kalman gain during calculation of the navigation information next time, the covariance is updated according to

$P_k^+ = (I - K_k H_k) P_k^-$.

In this embodiment, a Kalman gain value is calculated by using the observation noise formed by the residual values, and the navigation information is corrected by using the two-dimensional observation vector formed by the steering angle and the movement velocity, so that the navigation information is corrected by using the vehicle information, noise impact is eliminated, and data accuracy is improved.

Step S104: Navigating the vehicle based on the target navigation information.

In this embodiment, navigation of a vehicle in various environments is implemented based on the target navigation information obtained through calculation independent of an environment.

In order to perform corresponding methods in the foregoing method embodiments to implement corresponding functions and technical effects, a navigation information processing apparatus is provided below. Referring to FIG. 2, FIG. 2 is a structural block diagram of a navigation information processing apparatus according to an embodiment of the present application. Each module included in the apparatus in this embodiment is configured to perform each step in the embodiments corresponding to FIG. 1. For details, reference may be made to FIG. 1 and the related description in the embodiments corresponding to FIG. 1. For ease of description, only parts related to this embodiment are shown. The navigation information processing apparatus provided in the embodiment of the present application includes:

an acquisition module 201, configured to acquire motion state information of a vehicle based on an inertial device, and acquire vehicle information of the vehicle based on a controller area network;

a solution module 202, configured to perform a strapdown solution on the motion state information to obtain navigation information;

a fusion module 203, configured to fuse the navigation information and the vehicle information by using a preset Kalman filter to obtain target navigation information, where an input vector of the Kalman filter is a two-dimensional vector; and

a navigation module 204, configured to navigate the vehicle based on the target navigation information.

In an embodiment, the acquisition module 201 includes:

a first acquisition unit, configured to acquire a three-axis acceleration and a three-axis angular velocity of the vehicle based on the inertial device;

a first calculation unit, configured to calculate position coordinates, a three-dimensional motion velocity, and an attitude quaternion of the vehicle based on the three-axis acceleration and the three-axis angular velocity; and

a construction unit, configured to construct a state vector of the vehicle based on the position coordinates, the three-dimensional motion velocity, and the attitude quaternion, and use the state vector as the motion state information.

In an embodiment, the acquisition module 201 further includes:

a second acquisition unit, configured to acquire, based on the controller area network, a target steering angle and a target movement velocity of the vehicle in a target time period;

a second calculation unit, configured to calculate an angle residual value of the target steering angle and a velocity residual value of the target movement velocity; and

a using unit, configured to use the target steering angle and the target movement velocity as the vehicle information when the angle residual value is less than a first preset threshold and the velocity residual value is less than a second preset threshold.

In an embodiment, the second acquisition unit includes:

an acquisition subunit, configured to acquire, based on the controller area network, a steering angle and a movement velocity of the vehicle in the target time period;

a determining subunit, configured to determine a first difference value between a time for acquiring the steering angle and a time for acquiring the motion state information, and a second difference value between a time for acquiring the movement velocity and a time for acquiring the motion state information; and

a using subunit, configured to use the steering angle as the target steering angle and use the movement velocity as the target movement velocity when both the first difference value and the second difference value are less than a preset difference value.

In an embodiment, the motion state information includes position coordinates, a three-dimensional motion velocity, and an attitude quaternion, and the solution module 202 includes:

a differentiation unit, configured to separately perform differentiation on the position coordinates, the three-dimensional motion velocity, and the attitude quaternion to obtain a first derivative result, where a derivative result of the three-dimensional motion velocity is a three-dimensional motion acceleration;
a first correction unit, configured to perform bias correction on the three-dimensional motion acceleration in the first derivative result to obtain a second derivative result; and
an operation unit, configured to perform fourth-order approximation operation on the second derivative result to obtain the navigation information.

In an embodiment, the first correction unit includes:

a correction subunit, configured to perform the bias correction on the three-dimensional motion acceleration by using a preset calculation formula to obtain an acceleration correction result, and form the second derivative result by using a derivative result of the position coordinates, a derivative result of the attitude quaternion, and the acceleration correction result, where the preset calculation formula is as follows:

$$f_{xyz} = C_b^n f_{sf}^b - (2w_{ie} + w_{en}) \times v_{en} + g$$

where $f_{xyz}$ is an acceleration correction result, $Cb$ is a navigation coordinate system, $f_{sf}^b$ is a three-dimensional motion acceleration, $2w_{ie} \times v_{en}$ is a Coriolis acceleration caused by vehicle motion and rotation of the earth, $w_{en} \times v_{en}$ is a centripetal acceleration to the ground caused by the vehicle motion, and $g$ is a gravitational acceleration.

In an embodiment, the vehicle information includes a steering angle and a movement velocity, and the fusion module 303 includes:

a third acquisition unit, configured to obtain an angle residual value of the steering angle and a velocity residual value of the movement velocity;
a forming unit, configured to form a two-dimensional observation vector by using the steering angle and the movement velocity, and form an observation noise by using the angle residual value and the velocity residual value;
a third calculation unit, configured to calculate a Kalman gain value of the Kalman filter based on the observation noise; and
a second correction unit, configured to perform data correction on the navigation information based on the two-dimensional observation vector and the Kalman gain value to obtain the target navigation information.

The navigation information processing apparatus may implement the navigation information processing method in the foregoing method embodiments. An optional implementation in the foregoing method embodiments is also applicable to this embodiment, and details are not described herein again. For other content in the embodiments of the present application, reference may be made to the content in the foregoing method embodiments, and details are not repeated in this embodiment.

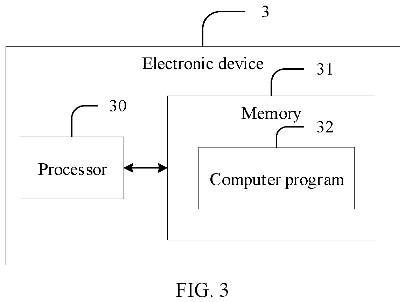

FIG. 3 is a schematic structural diagram of an electronic device according to an embodiment of the present application. As shown in FIG. 3, an electronic device 3 in this embodiment includes: at least one processor 30 (only one is shown in FIG. 3); a memory 31; and a computer program 32 that is stored in the memory 31 and runs on the at least one processor 30, where when the processor 30 executes the computer program 32, steps in any one of the foregoing method embodiments are implemented.

The electronic device 3 may be a computer device such as a smartphone, a tablet computer, a desktop computer, a supercomputer, a personal digital assistant, a physical server, and a cloud server. The electronic device may include, but not limited to, a processor 30 and a memory 31. A person skilled in the art may appreciate that FIG. 3 only shows an example of the electronic device 3, and does not constitute a limitation on the electronic device 3. The electronic device 3 may include more or fewer components than those shown in the figure, or some combined components or different components. For example, the electronic device 3 may further include an input/output device, a network access device, and the like.

The processor 30 may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA), or another programmable logic device, a discrete gate, a transistor logic device, a discrete hardware component, or the like. The general-purpose processor may be a microprocessor, or the processor may be any conventional processor or the like.

In some embodiments, the memory 31 may be an internal storage unit of the electronic device 3, for example, a hard disk or a memory of the electronic device 3. In some other embodiments, the memory 31 may be an external storage device of the electronic device 3, for example, a plug-in hard disk, a smart media card (Smart Media Card, SMC), a secure digital (Secure Digital, SD) card, or a flash card (Flash Card) that is equipped on the electronic device 3. Further, the memory 31 may alternatively include both an internal storage unit and an external storage device of the electronic device 3. The memory 31 is configured to store an operating system, an application program, a boot loader (BootLoader), data, another program, and the like, for example, program codes of the computer program. The memory 31 may further be used to temporarily store data that has been output or is to be output.

In addition, an embodiment of the present application further provides a computer-readable storage medium. The computer-readable storage medium stores a computer program. When the computer program is executed by a processor, steps in any one of the foregoing method embodiments may be implemented.

An embodiment of the present application further provides a computer program product. When the computer program product runs on an electronic device, the steps in the foregoing various method embodiments may be implemented when the electronic device executes the computer program product.

In the several embodiments provided in the present application, it should be appreciated that the disclosed apparatus and method may be implemented in other manners. The apparatus embodiments described above are merely illustrative. For example, the flowcharts and block diagrams in the accompanying drawings show possible architectures, functions and operations of the apparatus, the method and the computer program product according to various embodiments of the present application. In this regard, each block in the flowchart or block diagram may represent a module, a program segment or a portion of a code, which contains one or more executable instructions for implementing a specified logical function. It should also be noted that in some alternative implementations, functions marked by blocks may also occur in an order differing from that marked in the drawings. For example, two consecutive blocks may actually be executed substantially in parallel, or sometimes be executed in a reverse order, depending on functions involved. It should also be noted that each block in a block diagram and/or a flowchart, and combinations of blocks in the block diagrams and/or flowcharts, may be implemented in a dedicated hardware-based system that performs specified functions or actions, or may be implemented by a combination of dedicated hardware and computer instructions.

In addition, the functional modules in the various embodiments according to the present application may be integrated to form an independent part, or each module may exist separately, or two or more modules may be integrated to form an independent part.

If the functions are implemented in the form of software functional modules and sold or used as independent products, the functions may be stored in a computer-readable storage medium. Based on such an understanding, the essence of the technical solutions of the present application, or the part contributing to the conventional technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present application. The foregoing storage medium includes media that may store a program code, such as a USB flash disk, a mobile hard disk, a read-only memory (Read-Only Memory, ROM), a random access memory (Random Access Memory, RAM), a magnetic disk, or an optical disk.

The foregoing descriptions are merely the embodiments of the present application, but are not intended to limit the protection scope of the present application. For a person skilled in the art, various changes and variations may be made in the present application. Any modification, equivalent replacement, or improvement made within the spirit and principle of the present application shall be included in the protection scope of the present application. It should be noted that similar reference signs and letters indicate similar items in the following drawings. Therefore, once a specific item is defined in one drawing, it does not need to be further defined and explained in the subsequent drawings.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application should be subject to the protection scope of the claims.

It should be noted that in this specification, relational terms such as "first" and "second" are only used to distinguish one entity or operation from another, and do not necessarily require or imply that any actual relationship or sequence exists between these entities or operations. In addition, the terms "comprise", "include" and any other variants thereof are intended to cover non-exclusive inclusion, so that a process, a method, an article, or a device that includes a series of elements not only includes these elements, but may also include other elements not expressly listed, or also include elements inherent to this process, method, article, or device. Without being subject to further limitations, an element defined by a phrase "including one..." does not exclude presence of other identical elements in the process, method, article, or device that includes the element.

**Claims**

1. A navigation information processing method, comprising:

   acquiring motion state information of a vehicle based on an inertial device, and acquiring vehicle information of the vehicle based on a controller area network;
   performing a strapdown solution on the motion state information to obtain navigation information;
   fusing the navigation information and the vehicle information by using a preset Kalman filter to obtain target navigation information, wherein an input vector of the Kalman filter is a two-dimensional vector; and
   navigating the vehicle based on the target navigation information.

2. The navigation information processing method according to claim 1, wherein the acquiring motion state information of a vehicle based on an inertial device comprises:

   acquiring a three-axis acceleration and a three-axis angular velocity of the vehicle based on the inertial device;
   calculating position coordinates, a three-dimensional motion velocity, and an attitude quaternion of the vehicle based on the three-axis acceleration and the three-axis angular velocity; and
   constructing a state vector of the vehicle based on the position coordinates, the three-dimensional motion velocity, and the attitude quaternion, and using the state vector as the motion state information.

3. The navigation information processing method according to claim 1, wherein the acquiring vehicle information of the vehicle based on a controller area network comprises:

   acquiring, based on the controller area network, a target steering angle and a target movement velocity of the vehicle in a target time period;
   calculating an angle residual value of the target steering angle and a velocity residual value of the target movement velocity; and
   using the target steering angle and the target movement velocity as the vehicle information when the angle residual value is less than a first preset threshold and the velocity residual value is less than a second preset threshold.

4. The navigation information processing method according to claim 3, wherein the acquiring, based on the controller area network, a target steering angle and a target movement velocity of the vehicle in a target time period comprises:

   acquiring, based on the controller area network, a steering angle and a movement velocity of the vehicle in the target time period;
   determining a first difference value between a time for acquiring the steering angle and a time for acquiring the motion state information, and a second difference value between a time for acquiring the movement velocity and a time for acquiring the motion state information; and
   using the steering angle as the target steering angle and using the movement velocity as the target movement velocity when both the first difference value and the second difference value are less than a preset difference value.

5. The navigation information processing method according to claim 1, wherein the motion state information comprises position coordinates, a three-dimensional motion velocity, and an attitude quaternion, and the performing a strapdown solution on the motion state information to obtain navigation information comprises:

   separately performing differentiation on the position coordinates, the three-dimensional motion velocity, and the attitude quaternion to obtain a first derivative result, wherein a derivative result of the three-dimensional motion velocity is a three-dimensional motion acceleration;

performing bias correction on the three-dimensional motion acceleration in the first derivative result to obtain a second derivative result; and

performing fourth-order approximation operation on the second derivative result to obtain the navigation information.

6. The navigation information processing method according to claim 5, wherein the performing bias correction on the three-dimensional motion acceleration in the first derivative result to obtain a second derivative result comprises:

performing the bias correction on the three-dimensional motion acceleration by using a preset calculation formula to obtain an acceleration correction result, and forming the second derivative result by using a derivative result of the position coordinates, a derivative result of the attitude quaternion, and the acceleration correction result, wherein the preset calculation formula is as follow:

$$f_{xyz} = C_b^n f_{sf}^b - (2w_{ie} + w_{en}) \times v_{en} + g$$

wherein $f_{xyz}$ is an acceleration correction result, $Cb$ is a navigation coordinate system, $f_{sf}^b$ is a three-dimensional motion acceleration, $2w_{ie} \times v_{en}$ is a Coriolis acceleration caused by vehicle motion and rotation of the earth, $w_{en} \times v_{en}$ is a centripetal acceleration to the ground caused by the vehicle motion, and g is a gravitational acceleration.

7. The navigation information processing method according to claim 1, wherein the vehicle information comprises a steering angle and a movement velocity, and the fusing the navigation information and the vehicle information by using a preset Kalman filter to obtain target navigation information comprises:

obtaining an angle residual value of the steering angle and a velocity residual value of the movement velocity;

forming a two-dimensional observation vector by using the steering angle and the movement velocity, and forming an observation noise by using the angle residual value and the velocity residual value;

calculating a Kalman gain value of the Kalman filter based on the observation noise; and

performing data correction on the navigation information based on the two-dimensional observation vector and the Kalman gain value to obtain the target navigation information.

8. A navigation information processing apparatus, comprising:

an acquisition module, configured to acquire motion state information of a vehicle based on an inertial device, and acquire vehicle information of the vehicle based on a controller area network;

a solution module, configured to perform a strapdown solution on the motion state information to obtain navigation information;

fusion module, configured to fuse the navigation information and the vehicle information by using a preset Kalman filter to obtain target navigation information, wherein an input vector of the Kalman filter is a two-dimensional vector; and

a navigation module, configured to navigate the vehicle based on the target navigation information.

9. An electronic device comprising a memory and a processor, wherein the memory is configured to store a computer program, and the processor runs the computer program to cause the electronic device to perform the navigation information processing method according to any one of claims 1 to 7.

10. A computer-readable storage medium on which a computer program is stored, wherein when the computer program is executed by a processor, the navigation information processing method according to any one of claims 1 to 7 is implemented.

S101

Acquiring motion state information of a vehicle based on an inertial device, and acquiring vehicle information of the vehicle based on a controller area network

S102

Performing a strapdown solution on the motion state information to obtain navigation information

S103

Fusing the navigation information and the vehicle information by using a preset Kalman filter to obtain target navigation information, where an input vector of the Kalman filter is a two-dimensional vector

S104

Navigating the vehicle based on the target navigation information

FIG. 1

Navigation information processing system

Acquisition module — 201

Solution module — 202

Fusion module — 203

Navigation module — 204

FIG. 2

3

Electronic device

31

30

Memory

32

Processor ⟷ Computer program

FIG. 3

<table>
<tr><td colspan="2">**INTERNATIONAL SEARCH REPORT**</td><td>International application No.<br>**PCT/CN2022/077896**</td></tr>
</table>

**A. CLASSIFICATION OF SUBJECT MATTER**

G01C 21/26(2006.01)i; G01C 21/16(2006.01)i; G01C 21/20(2006.01)i; G06T 7/277(2017.01)i; G06F 17/11(2006.01)i

According to International Patent Classification (IPC) or to both national classification and IPC

**B. FIELDS SEARCHED**

Minimum documentation searched (classification system followed by classification symbols)

G01C21/-;G06T7/-;G06F17/-

Documentation searched other than minimum documentation to the extent that such documents are included in the fields searched

Electronic data base consulted during the international search (name of data base and, where practicable, search terms used)

CNPAT; CNKI; EPODOC; WPI: 车, 导航, 定位, 惯导, 惯性导航, 捷联, 控制器局域网, 局域网, 轮速传感器, 方向盘转角, 转角传感器, 卡尔曼, 观测, 位置, 速度, 角度, 角速度, 姿态, 四元数, 加速度, 修正, 校正, 重力, 坐标系, 矩阵, car+, vehicle +, navigat+, locat+, position+, IMU+, MEMS+, INS+, SINS+, inertial+, CAN+, controller aera network+, wheel speed sensor +, wheel-speed sensor+, wheel angle+, Kalman+, observation+, measure+, matrix+, matrice+, quaternion+, accelerat+, correct +, adjust+, calibrat+

**C. DOCUMENTS CONSIDERED TO BE RELEVANT**

| Category* | Citation of document, with indication, where appropriate, of the relevant passages | Relevant to claim No. |
|---|---|---|
| PX | CN 113008244 A (GUANGZHOU ASENSING ELECTRONICS CO., LTD.) 22 June 2021 (2021-06-22)<br>    claims 1-10 | 1-10 |
| X | CN 111780756 A (BEIJING BAIDU NETCOM SCIENCE AND TECHNOLOGY CO., LTD.) 16 October 2020 (2020-10-16)<br>    description paragraphs 0028-0274 | 1-2, 7-10 |
| Y | CN 111780756 A (BEIJING BAIDU NETCOM SCIENCE AND TECHNOLOGY CO., LTD.) 16 October 2020 (2020-10-16)<br>    description paragraphs 0028-0274 | 3-6 |
| Y | CN 105823484 A (TSINGHUA UNIVERSITY) 03 August 2016 (2016-08-03)<br>    description, paragraphs [0006]-[0047] | 3-4 |
| Y | CN 107063246 A (QILU UNIVERSITY OF TECHNOLOGY) 18 August 2017 (2017-08-18)<br>    description paragraphs 0017-0033 | 5-6 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 April 2022** | **28 April 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/077896**

C.    DOCUMENTS CONSIDERED TO BE RELEVANT

| Category* | Citation of document, with indication, where appropriate, of the relevant passages | Relevant to claim No. |
|---|---|---|
| X | CN 108731667 A (BAIDU ONLINE NETWORK TECHNOLOGY (BEIJING) CO., LTD.) 02 November 2018 (2018-11-02)<br>    description paragraphs 0029-0290 | 1-2, 7-10 |
| X | CN 104076382 A (CHINA UNIVERSITY OF PETROLEUM et al.) 01 October 2014 (2014-10-01)<br>    description paragraphs 0009-0038 | 1-2, 7-10 |
| A | CN 108240809 A (FAURECIA COAGENT ELECTRONIC TECHNOLOGY CO., LTD.) 03 July 2018 (2018-07-03)<br>    entire document | 1-10 |
| A | US 2020340819 A1 (TRIMBLE INC.) 29 October 2020 (2020-10-29)<br>    entire document | 1-10 |

Form PCT/ISA/210 (second sheet) (January 2015)

**INTERNATIONAL SEARCH REPORT**
Information on patent family members

| International application No. |
| --- |
| **PCT/CN2022/077896** |

| Patent document cited in search report | | | Publication date (day/month/year) | Patent family member(s) | | | Publication date (day/month/year) |
| --- | --- | --- | --- | --- | --- | --- | --- |
| CN | 113008244 | A | 22 June 2021 | None | | | |
| CN | 111780756 | A | 16 October 2020 | JP | 2021177168 | A | 11 November 2021 |
| | | | | EP | 3842746 | A2 | 30 June 2021 |
| | | | | US | 2021310809 | A1 | 07 October 2021 |
| | | | | KR | 20210049724 | A | 06 May 2021 |
| CN | 105823484 | A | 03 August 2016 | CN | 105823484 | B | 23 June 2017 |
| CN | 107063246 | A | 18 August 2017 | None | | | |
| CN | 108731667 | A | 02 November 2018 | CN | 108731667 | B | 29 September 2020 |
| CN | 104076382 | A | 01 October 2014 | CN | 104076382 | B | 23 November 2016 |
| CN | 108240809 | A | 03 July 2018 | None | | | |
| US | 2020340819 | A1 | 29 October 2020 | US | 2020033146 | A1 | 30 January 2020 |
| | | | | EP | 3826902 | A1 | 02 June 2021 |
| | | | | WO | 2020023206 | A1 | 30 January 2020 |
| | | | | US | 10753752 | B2 | 25 August 2020 |

Form PCT/ISA/210 (patent family annex) (January 2015)